# FASCICULE DE BREVET EUROPEEN

(11) **EP 1 103 417 B1**
(45) Date de publication et mention de la délivrance du brevet: **07.05.2008**
(21) Numéro de dépôt: 00402679.5
(22) Date de dépôt: 28.09.2000
(51) Int. Cl.: B60Q 1/04

(54) **Véhicule à dispositif d'éclairage et/ou de signalisation monté mobile**
Bewegliche Fahrzeugebeleuchtungs- oder Signaleinrichtung
Mobile lighting or signaling device for vehicle

(30) Priorité: 29.11.1999 FR 9914986
(43) Date de publication de la demande: 30.05.2001
(73) Titulaire: VALEO VISION, 93012 Bobigny Cédex (FR)
(72) Inventeur: Arlon, Philippe, c/o Valeo Vision, 93012 Bobigny Cédex (FR)
(74) Mandataire: Hervouet, Sylvie

(56) Documents cités:
- EP-A2- 0 410 267
- DE-A- 4 311 419
- FR-A- 2 488 556
- US-A- 3 742 205

## Description

L'invention concerne les dispositifs d'éclairage et/ou de signalisation pour véhicule.

On connaît du document EP-0 422 405 un projecteur fixé à un châssis de véhicule par une charnière de sorte que le projecteur peut être déplacé à rotation par rapport au châssis. Certaines parties habituellement cachées du projecteur sont ainsi rendues facilement accessibles. On peut par exemple facilement démonter la lampe pour la remplacer. Ce projecteur a pour avantage qu'il ne nécessite pas a priori de démonter les différentes pièces du projecteur pour accéder à ces parties. On évite ainsi d'endommager l'intérieur du projecteur lors du démontage ou du montage, ou encore entre ceux-ci. On évite également que l'intérieur du projecteur ne soit pollué par diverses substances. Toutefois, le projecteur de ce document a pour inconvénient que la course en rotation du projecteur par rapport à la carrosserie impose certaines contraintes sur la forme de cette carrosserie au voisinage du projecteur pour permettre une telle course.

Le document EP A2 0410 267 divulgue un projecteur rétractable dans la carrosserie du véhicule.

Un but de l'invention est de permettre d'accéder facilement à certaines parties d'un dispositif d'éclairage et/ou de signalisation non accessibles en position de fonctionnement sans démontage du dispositif et en évitant les contraintes associées au document précité.

En vue de la réalisation de ce but, on prévoit selon l'invention un véhicule comportant un dispositif d'éclairage et/ou de signalisation, un châssis et des moyens de montage mobile du dispositif sur le châssis, dans lequel les moyens de montage sont agencés pour déplacer le dispositif par rapport au châssis suivant un mouvement décomposable au moins en une translation et une rotation.

Ainsi, de tels moyens de montage offrent une cinématique imposant peu de contraintes sur la forme de la carrosserie au voisinage du dispositif. De plus, on évite encore le démontage du dispositif pour accéder à certaines de ses parties.

Le véhicule selon l'invention pourra en outre présenter au moins l'une quelconque des caractéristiques suivantes :
- les moyens de montage sont agencés de sorte que le mouvement est décomposable au moins en une translation et une rotation ;
- la rotation est une rotation axiale ;
- les moyens de montage comportent au moins une biellette ;
- la ou chaque biellette est associée à des axes de rotation perpendiculaires à une direction de marche du véhicule ;
- les moyens de montage comportent au moins deux biellettes associées à des axes de rotation non coaxiaux d'une biellette à l'autre ;
- les deux biellettes sont indépendantes ;
- au moins l'une des biellettes est coudée ;
- les moyens de montage comportent au moins une glissière ;
- les moyens de montage comportent au moins une glissière recevant une partie de l'une des biellettes ;
- la biellette associée à la glissière est reliée à une partie du dispositif plus en arrière du dispositif que la partie du dispositif reliée à l'autre biellette ;
- la glissière est fixe par rapport au châssis ;
- la glissière est rectiligne ;
- la glissière est parallèle à une direction de marche du véhicule ; et
- les moyens de montage comportent deux sous-ensembles comprenant chacun au moins une biellette et/ou au moins une glissière.

On prévoit également selon l'invention un ensemble comportant un dispositif d'éclairage et/ou de signalisation pour véhicule, un support et des moyens de montage mobile du dispositif sur le support, agencés pour déplacer le dispositif par rapport au support suivant un mouvement décomposable au moins en une translation et une rotation.

Ainsi, il suffit de monter le support sur le châssis d'un véhicule pour que le dispositif présente la cinématique précitée par rapport au châssis. On évite donc l'assemblage détaillé des moyens de montage au châssis, ce qui est souvent malaisé à effectuer sur chaîne.

D'autres caractéristiques et avantages de l'invention apparaîtront encore dans la description suivante d'un mode préféré de réalisation et de variantes donnés à titre d'exemples non limitatifs. Aux dessins annexés :

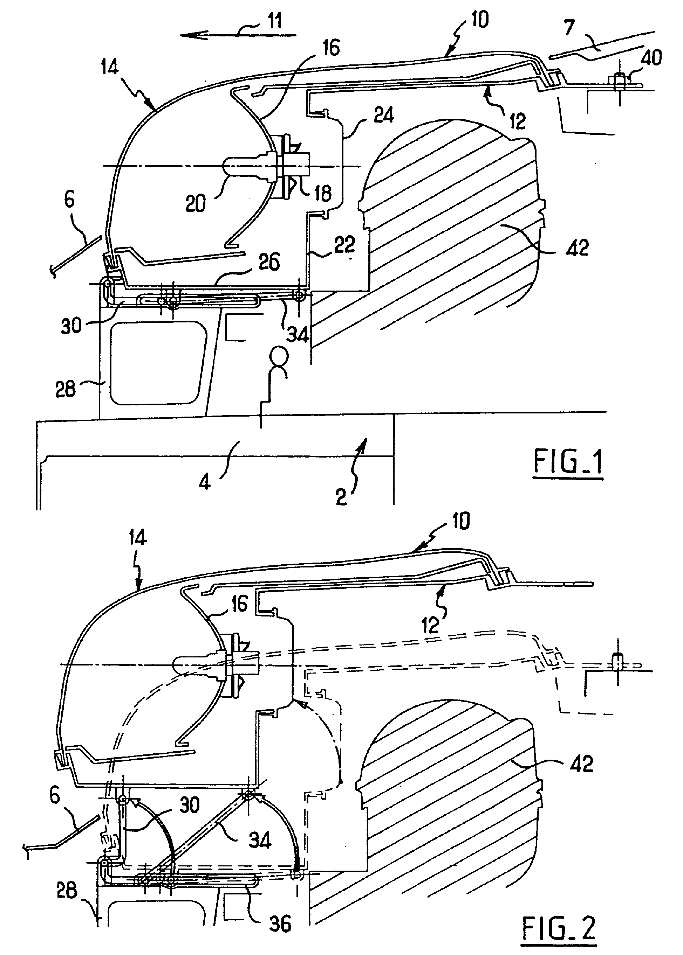

les figures 1 à 3 sont trois vues en coupe verticale longitudinale d'un véhicule au niveau de l'un des projecteurs, montrant trois positions du projecteur au cours de son mouvement.

En référence à la figure 1, dans le présent mode de réalisation, le véhicule comporte un châssis 2 comprenant une carrosserie. Le châssis comprend notamment des longerons 4. Il comprend un pare-chocs 6 ou un bandeau. La carrosserie comporte un capot obturant un compartiment moteur du véhicule et s'ouvrant vers l'avant.

Le véhicule comporte un dispositif d'éclairage tel qu'un projecteur 10. Le projecteur comporte un boîtier 12, une glace 14, un réflecteur 16, un porte-lampe 18 monté sur le réflecteur et portant une lampe 20 s'étendant à travers un orifice du réflecteur. Le faisceau émis par la lampe est réfléchi par le réflecteur vers l'avant du véhicule, par référence à sa direction et à son sens de marche normaux indiqués par la flèche 11 sur la figure 1. Le boîtier 12 comporte notamment une paroi arrière 22 présentant en regard du porte-lampe 18 une ouverture obturée de façon démontable par un capuchon ou couvercle 24. Le boîtier comporte une paroi inférieure 26. Les éléments formant le projecteur sont fixés les uns aux autres et mobiles d'une seule pièce avec celui-ci comme on le verra plus loin.

Le véhicule comporte des moyens de montage mobile du projecteur 10 au châssis 2. Ces moyens comportent un support 28 fixé au châssis, par exemple au longeron 4. Ces moyens comportent en outre deux sous-ensembles identiques entre eux et s'étendant en regard l'un de l'autre symétriquement par rapport à un plan vertical parallèle à la direction de marche du véhicule. On décrira donc l'un seulement de ces sous-ensembles.

Chaque sous-ensemble comporte deux biellettes. La première biellette 30, ou biellette avant, a une première extrémité articulée à la paroi inférieure 26 du boîtier et une deuxième extrémité articulée à un bras fixe du support 28, s'étendant en saillie d'une face supérieure du support. Cette biellette 30 est coudée et a une forme en « L », la branche du « L » la plus courte étant attenante au support. La deuxième biellette 34, ou biellette arrière, a une première extrémité articulée à la paroi inférieure 26, à un point situé en arrière par rapport au point d'articulation de la biellette 30 à cette paroi. La deuxième extrémité de la biellette arrière 34 coulisse dans une glissière rectiligne 36 du support, parallèle à la direction de marche du véhicule. La deuxième biellette 34 est rectiligne et plus longue que la première biellette 30.

Le projecteur peut occuper une position de fonctionnement sur le châssis, illustrée à la figure 1. Il s'agit de la position la plus rentrée dans le châssis. Dans cette position, la biellette avant 30 a sa petite branche verticale et sa grande branche horizontale. Cette dernière s'étend dans le plan horizontal de la glissière 36. La biellette arrière 34 est également couchée à l'horizontale. Son extrémité coulissante dans la glissière s'étend à l'extrémité avant de la glissière. Sur chaque biellette, le point relié au projecteur 10 est plus en arrière que le point relié au support 28. Dans cette position, le projecteur peut être fixé à demeure au châssis 4, par exemple par un boulonnage 40 de la partie arrière du boîtier à une pièce de la carrosserie, le boulon s'étendant sous le capot 7 en position fermée de celui-ci. Cette position est une extrémité de la course du projecteur par rapport au châssis.

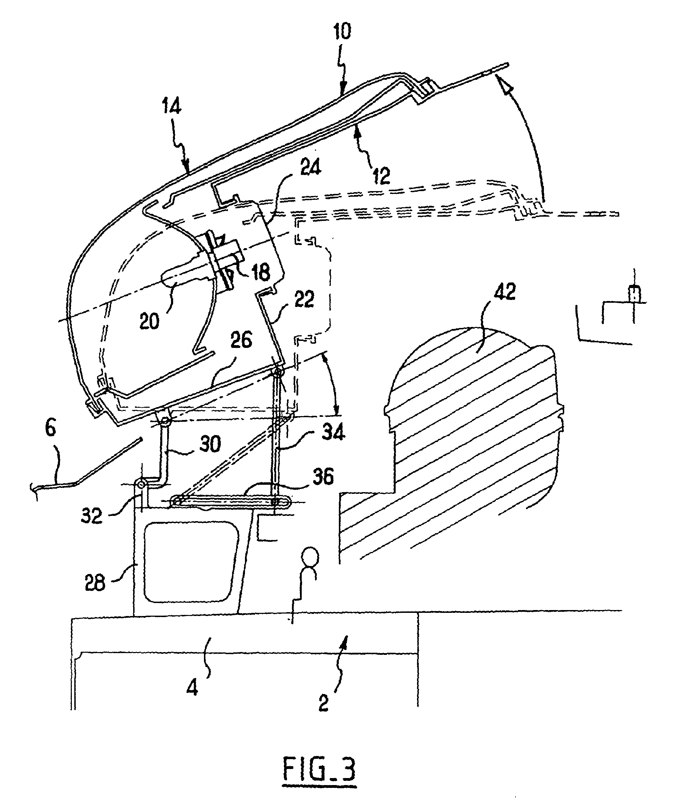

Une autre extrémité de la course du projecteur par rapport au châssis est illustrée à la figure 3. Il s'agit de la position la plus sortie hors du véhicule. Dans cette position, la petite branche de la biellette avant 30 est horizontale et sa grande branche verticale. La biellette arrière 34 est verticale. Son extrémité coulissante est proche de l'extrémité arrière de la glissière. Dans cette position, le projecteur s'étend plus haut que dans sa position de fonctionnement et est plus incliné vers l'avant dans le sens trigonométrique (ou antihoraire).

Le mouvement du projecteur de la position de la figure 1 à celle de la figure 3 s'apparente à un mouvement dans deux dimensions. Or, comme on le sait, un tel mouvement est ou bien une rotation, ou bien une translation ou bien la résultante d'une rotation et d'une translation. Selon l'invention, le mouvement sera la résultante d'une rotation et d'une translation. Il comporte une composante constituée par une translation. Compte tenu de l'agencement des moyens de montage mobile, le projecteur peut avoir différentes trajectoires de l'une à l'autre des deux positions extrêmes, en fonction des manoeuvres de l'opérateur.

Une trajectoire possible est la suivante. A partir de la position de la figure 1, l'opérateur soulève d'abord le projecteur parallèlement à lui-même. Il s'agit donc d'une translation pure. Chaque point du projecteur suit une trajectoire en arc de cercle et tous les points ont le même vecteur vitesse. Chaque biellette 30, 34 se déplace en rotation autour de son extrémité reliée au support 28. Notamment, l'extrémité de la biellette arrière 34 reste fixe dans la glissière 36. Le mouvement a lieu comme si les biellettes formaient un montage en parallélogramme. La position intermédiaire à laquelle aboutit ce mouvement est illustrée à la figure 2. La biellette avant 30 a déjà sa position finale de la figure 3. La biellette arrière 34 est inclinée par rapport aux directions verticale et horizontale.

La deuxième et dernière portion du mouvement, pour passer de la position de la figure 2 à celle de la figure 3 consiste en une rotation autour de l'extrémité de la biellette avant 30 reliée au projecteur (en fait autour de l'axe commun des extrémités respectives des deux biellettes avant des sous-ensembles respectifs). Au cours de ce mouvement, la partie arrière du projecteur se relève. L'extrémité inférieure de la biellette arrière 34 coulisse vers l'arrière dans la glissière.

Une telle trajectoire consiste donc à effectuer d'abord la translation puis ensuite la rotation. Il est clair que de nombreuses trajectoires sont envisageables dans lesquelles ces deux composantes géométriques du mouvement sont fondues l'une dans l'autre et plus ou moins simultanées.

Au cours du mouvement, le projecteur contourne le bandeau.

Les deux sous-ensembles des moyens de montage ont leurs axes respectifs en coïncidence. Ces axes sont ici horizontaux et perpendiculaires à la direction de marche du véhicule. Bien entendu, les deux sous-ensembles se déforment en même temps de la même façon.

Dans la position de la figure 3, on peut facilement accéder au capuchon 24 pour l'ôter puis ôter le porte-lampe 18 pour remplacer la lampe 20. On peut aussi accéder à d'autres parties par exemple au connecteur électrique, sans être gêné par un autre organe du véhicule, par exemple la boîte à fusible 42.

Ces moyens de montage permettent ensuite de retrouver la position de la figure 1 sans aucun réglage à l'issue du mouvement inverse.

Il n'est pas nécessaire de prévoir un espace pour démonter les équipements annexes du projecteur ou du compartiment moteur ou pour accéder à ceux-ci.

Pour monter le projecteur sur le véhicule lors de la fabrication, il suffit d'assembler entre eux le projecteur 10, les moyens de montage et le support 28, puis de fixer cet ensemble sur le véhicule : fixation du support 28 au longeron 4, et boulonnage 40.

Bien entendu, on pourra apporter à l'invention de nombreuses modifications sans sortir du cadre de celle-ci.

On pourra prévoir que la biellette avant 30 et la glissière 36 sont directement reliées au châssis du véhicule.

On pourra se dispenser de biellette et prévoir deux glissières dans chaque sous-ensemble. Au contraire, on pourra prévoir deux biellettes sans glissière pour chaque sous-ensemble. La glissière pourra être sur le dispositif d'éclairage et/ou de signalisation. Chaque sous-ensemble pourra comprendre au moins un groupe de deux biellettes articulées l'une à l'autre. Les axes des biellettes pourront être non perpendiculaires à la direction de marche du véhicule, par exemple pour un mouvement du projecteur vers le côté du véhicule. La glissière pourra être non rectiligne.

L'invention est applicable à un dispositif de signalisation tel qu'un feu.

Des moyens de motorisation et/ou des moyens de rappel pourront être prévus pour le déplacement du dispositif par rapport au châssis.

En plus ou en remplacement de la ou chaque biellette et/ou de la ou chaque glissière, les moyens de montage pourront comprendre d'autres éléments tels qu'au moins un ressort et/ou au moins un vérin.

## Revendications

1. Véhicule comportant un dispositif d'éclairage et/ou de signalisation (10), un châssis (2) et des moyens de montage mobile du dispositif sur le châssis, **caractérisé en ce que** les moyens de montage (30, 34, 36) sont agencés pour déplacer le dispositif par rapport au châssis suivant un mouvement décomposable au moins en une translation et une rotation.

2. Véhicule selon la revendication 1, **caractérisé en ce que** la rotation est une rotation axiale.

3. Véhicule selon l'une quelconque des revendications 1 à 2, **caractérisé en ce que** les moyens de montage comportent au moins une biellette (30, 34).

4. Véhicule selon la revendication 3, **caractérisé en ce que** la ou chaque biellette (30, 34) est associée à des axes de rotation perpendiculaires à une direction de marche du véhicule.

5. Véhicule selon l'une quelconque des revendications 1 à 4, **caractérisé en ce que** les moyens de montage comportent au moins deux biellettes (30, 34) associées à des axes de rotation non coaxiaux d'une biellette à l'autre.

6. Véhicule selon la revendication 5, **caractérisé en ce que** les deux biellettes (30, 34) sont indépendantes.

7. Véhicule selon la revendication 5 ou 6, **caractérisé en ce qu'**au moins l'une (30) des biellettes est coudée.

8. Véhicule selon l'une quelconque des revendications 1 à 7, **caractérisé en ce que** les moyens de montage comportent au moins une glissière (36).

9. Véhicule selon l'une quelconque des revendications 5 à 7, **caractérisé en ce que** les moyens de montage comportent au moins une glissière (36) recevant une partie de l'une (34) des biellettes.

10. Véhicule selon la revendication 9, **caractérisé en ce que** la biellette (34) associée à la glissière (36) est reliée à une partie du dispositif (10) plus en arrière du dispositif que la partie du dispositif reliée à l'autre biellette (30).

11. Véhicule selon l'une quelconque des revendications 8 à 10, **caractérisé en ce que** la glissière (36) est fixe par rapport au châssis (2).

12. Véhicule selon l'une quelconque des revendications 8 à 11, **caractérisé en ce que** la glissière (36) est rectiligne.

13. Véhicule selon la revendication 12, **caractérisé en ce que** la glissière (36) est parallèle à une direction de marche du véhicule.

14. Véhicule selon l'une quelconque des revendications 1 à 13, **caractérisé en ce que** les moyens de montage comportent deux sous-ensembles comprenant chacun au moins une biellette et/ou au moins une glissière.

15. Ensemble comportant un dispositif d'éclairage et/ou de signalisation (10) pour véhicule, **caractérisé en ce qu'**il comporte en outre un support (28) et des moyens (30, 34, 36) de montage mobile du dispositif (10) sur le support (28), agencés pour déplacer le dispositif par rapport au support suivant un mouvement décomposable au moins en une translation et une rotation.

## Claims

1. Vehicle comprising a lighting and/or signalling device (10), a chassis (2) and means for mobile fitting of the device on the chassis, **characterised in that** the fitting means (30, 34, 36) are arranged such as to displace the device relative to the chassis according to a movement which can be broken down into at least one of translation and one of rotation.

2. Vehicle according to claim 1, **characterised in that** the rotation is axial rotation.

3. Vehicle according to either of claims 1 or 2, **characterised in that** the fitting means comprise at least one connection rod (30, 34).

4. Vehicle according to claim 3, **characterised in that** the or each connection rod (30, 34) is associated with axes of rotation which are perpendicular to a direction of travel of the vehicle.

5. Vehicle according to any one of claims 1 to 4, **characterised in that** the fitting means comprise at least two connection rods (30, 34) which are associated with axes of rotation which are non-coaxial from one connection rod to the other.

6. Vehicle according to claim 5, **characterised in that** the two connection rods (30, 34) are independent.

7. Vehicle according to claim 5 or 6 **characterised in that** at least one (30) of the connection rods is bent.

8. Vehicle according to any one of claims 1 to 7, **characterised in that** the fitting means comprise at least one slide (36).

9. Vehicle according to any one of claims 5 to 7, **characterised in that** the fitting means comprise at least one slide (36) which receives part of one (34) of the connection rods.

10. Vehicle according to claim 9, **characterised in that** the connection rod (34) which is associated with the slide (36) is connected to a part of the device (10) which is further to the rear of the device than the part of the device which is connected to the other connection rod (30).

11. Vehicle according to any one of claims 8 to 10, **characterised in that** the slide (36) is secured to the chassis (2).

12. Vehicle according to any one of claims 8 to 11, **characterised in that** the slide (36) is straight.

13. Vehicle according to claim 12, **characterised in that** the slide (36) is parallel to a direction of travel of the vehicle.

14. Vehicle according to any one of claims 1 to 13, **characterised in that** the fitting means comprise sub-assemblies which each comprise at least one connection rod and/or at least one slide.

15. Assembly comprising a lighting and/or signalling device (10) for a vehicle, **characterised in that** it additionally comprises a support (28) and means (30, 34, 36) for mobile fitting of the device (10) on the support (28), which are arranged such as to displace the device relative to the support according to a movement which can be broken down into at least one of translation and one of rotation.

## Patentansprüche

1. Fahrzeug mit einer Beleuchtungs- und/oder Signalgebungsvorrichtung (10), einem Fahrgestell (2) und Mitteln zur beweglichen Montage der Vorrichtung auf dem Fahrgestell,
**dadurch gekennzeichnet, dass** die Montagemittel (30, 34, 36) dazu ausgebildet sind, die Vorrichtung bezüglich des Fahrgestells mit einer Bewegung zu verschieben, die in wenigstens eine Translations- und eine Drehbewegung zerlegbar ist.

2. Fahrzeug nach Anspruch 1,
**dadurch gekennzeichnet, dass** die Drehung eine axiale Drehung ist.

3. Fahrzeug nach einem der Ansprüche 1 bis 2,
**dadurch gekennzeichnet, dass** die Montagemittel wenigstens einen Schwingarm (30, 34) umfassen.

4. Fahrzeug nach Anspruch 3,
**dadurch gekennzeichnet, dass** der oder jeder Schwingarm (30, 34) Drehachsen zugeordnet ist, die rechtwinklig zu einer Fahrtrichtung des Fahrzeugs sind.

5. Fahrzeug nach einem der Ansprüche 1 bis 4,
**dadurch gekennzeichnet, dass** die Montagemittel wenigstens zwei Schwingarme (30, 34) umfassen, die Drehachsen zugeordnet sind, welche von einem Schwingarm zum nächsten nicht koaxial sind.

6. Fahrzeug nach Anspruch 5,
**dadurch gekennzeichnet, dass** die beiden Schwingarme (30, 34) voneinander unabhängig sind.

7. Fahrzeug nach Anspruch 5 oder 6,
**dadurch gekennzeichnet, dass** wenigstens einer (30) der Schwingarme abgewinkelt ist.

8. Fahrzeug nach einem der Ansprüche 1 bis 7,
**dadurch gekennzeichnet, dass** die Montagemittel wenigstens eine Gleitführung (36) umfassen.

9. Fahrzeug nach einem der Ansprüche 5 bis 7,
**dadurch gekennzeichnet, dass** die Montagemittel wenigstens eine Gleitführung (36) umfassen, die einen Teil eines (34) der Schwingarme aufnimmt.

10. Fahrzeug nach Anspruch 9,
**dadurch gekennzeichnet, dass** der der Gleitführung (36) zugeordnete Schwingarm (34) mit einem Teil der Vorrichtung (10) verbunden ist, der weiter hinten liegt als der Teil der Vorrichtung, der mit dem anderen Schwingarm (30) verbunden ist.

11. Fahrzeug nach einem der Ansprüche 8 bis 10,
**dadurch gekennzeichnet, dass** die Gleitführung (36) bezüglich des Fahrgestells (2) feststehend ist.

12. Fahrzeug nach einem der Ansprüche 8 bis 11,
**dadurch gekennzeichnet, dass** die Gleitführung (36) geradlinig ist.

13. Fahrzeug nach Anspruch 12,
**dadurch gekennzeichnet, dass** die Gleitführung (36) parallel zu einer Fahrtrichtung des Fahrzeugs ist.

14. Fahrzeug nach einem der Ansprüche 1 bis 13,
**dadurch gekennzeichnet, dass** die Montagemittel zwei Unterbaugruppen umfassen, die jeweils wenigstens einem Schwingarm und/oder wenigstens eine Gleitführung aufweisen.

15. Einheit mit einer Beleuchtungs- und/oder Signalgebungsvorrichtung (10) für Fahrzeuge,
**dadurch gekennzeichnet, dass** sie ferner einen Träger (28) und Mittel (30, 34, 36) zur beweglichen Montage der Vorrichtung (10) auf dem Träger (28) umfasst, die dazu ausgebildet sind, die Vorrichtung bezüglich des Trägers mit einer Bewegung zu verschieben, die in wenigstens eine Translations- und eine Drehbewegung zerlegbar ist.
